# EUROPEAN PATENT SPECIFICATION

(11) **EP 3 244 077 B1**
(45) Date of publication and mention of the grant of the patent: **03.07.2019**
(21) Application number: 17170346.5
(22) Date of filing: 10.05.2017
(51) Int. Cl.: F16B 25/00, F16B 25/10

(54) **WOOD SCREW WITH DRILL-POINT AND USE THEREOF AND SCREWING METHOD**
HOLZSCHRAUBE MIT BOHRPUNKT UND VERWENDUNG DAVON UND SCHRAUBVERFAHREN
VIS À BOIS COMPORTANT UN POINT DE PERÇAGE ET SON UTILISATION ET PROCÉDÉ DE VISSAGE

(30) Priority: 10.05.2016 DK 201670309
(43) Date of publication of application: 15.11.2017
(73) Proprietor: Dissing A/S, 8660 Skanderborg (DK)
(72) Inventor: Dissing, Claus Hornstrup, 8680 Ry (DK)
(74) Representative: Nielsen, Leif

(56) References cited:
- US-A- 4 034 641
- US-A- 4 330 229
- US-A- 4 583 898
- US-A1- 2002 127 071
- US-A1- 2015 063 946
- US-B2- 7 290 972

## Description

The present invention relates to a wood-screw with a drill-point and its use.

### Description of the Prior Art

In order ease screwing of a screw into the underlying material, it is known to provide screws with drill-points. Typically, the drill-points are conical. An example of a screw with a different drill-tip is shown in U.S. Patent Application US2013/051955; the drill-point has a central drill-tip and two wings on either side of the drill-tip, where the wings assist the drill-tip with the drilling; an alternative embodiment shows two wings without drill-tips.

Drill-points with central drill-tips and wings are also known from raw-plugs, for example, as shown in US5626245, US6354779, EP1036974B1, EP1244877B1, EP1669615A1, EP1977118B1. Another type of anchoring-screw is shown in US7290972, where the wings are helical on either side of a drill-tip; the helical section extends 180 degrees around the anchoring-screw in order to remove dust during the drilling.

US2015/063946 discloses a wood fastener that has a head being positioned at an end of a shank. The head is provided with a cutting structure comprising four planar walls for engaging the shank at an angle. The walls adjoin an adjacent wall by a rounded edge. The cutting structure includes a square cross-section formed by the walls intersecting a top portion of the head. The walls are defined by a straight rounded edge relative to the adjacent wall. The head includes a disk provided at an end of the walls.

A problem with screwing in wood is gradual change of the screw's angular screwing direction into the wood, as the tree's growth rings push the drill-point to one side. This is undesirable

### Description of the invention

It is the objective of the invention to provide a wood-screw suitable for screwing in wood with tree growth rings, where the screw has a lesser tendency to be deflected sideways during its travel into the wood during screwing. This is achieved with a wood-screw as described in more detail below.

The wood-screw has a screw-head and a stem extending from the screw-head and toward the opposite end of the screw relative to the screw-head, wherein a thread is provided around the stem, and the end that is opposite the screw-head is provided with a drill-point.

The drill-point is provided with a central drill-tip and a milling-wing on either one of the central drill-tip, wherein the distance from the screw-head to the end of the central drill-tip is longer than the distance from the screw-head to the end of the milling-wings. That is, the central drill-tip protrudes further forward than the milling-wings. Thus, when screwing into wood, the central drill-tip will initially drill into the wood and only when the central drill-tip has been drilled a distance X into the wood, the milling-wings will take a grip in the wood and mill the hole. By further advancing the screw, after the entire drill-point has been milled into the hole, the subsequent thread takes a grip in the wood material that surrounds the milled hole and pulls the screw into the wood.

According to the invention the milling-wings are provided with a protruding milling-edge, for example a sharp protruding milling-edge, at the periphery of the drill-point, such that this protruding milling-edge catches the wood as the first after the central drill-tip for milling a hole while the screw is driven forward, after which the remaining part of the milling-wing is milling further. Such a protruding milling-edge is provided by a concavity between the protruding milling-edge at the periphery and the central tip, wherein the concavity has its bottom retracted towards the screw-head relatively to the wing's protruding milling-edge at the periphery. In other words, the bottom of the concavity has a shorter distance to the screw-head than the protruding milling-edge of the milling-wing at the periphery of the drill-point. The concavity of the milling-wings has a curved profile from the central drill-tip and towards the periphery of the drill-point.

When the milling-wings have milled a length L into the wood, the thread will catch the wood material around the hole that was drilled by the milling-wings and define the further travel of the screw into the wood. In order for the thread to take a grip in the wood after this pre-drilling, the drill-point needs to have a smaller diameter than the thread.

The screw is different from a raw-plug. The screw is made of solid metal and thus not with a central hole as a raw-plug. Thus, the screw has a much larger mechanical stiffness than a raw-plug. The screw thread has more than three threads, for example 4, 5, 6, 7 or more.

In some embodiments, the milling-wings extend less than 180 degrees around the central axis, for example between 70 and 150 degrees or between 80 and 120 degrees. This is in contrast to the anchoring element of the above-mentioned US7290972 and is production-wise better.

For example, the screw is provided with a screw-head that has a larger diameter than the thread, whereby the screw will be stopped in its travel when the screw-head hits the surface of the wood.

In some embodiments, the screw-head has a conical underside. Advantageously, the screw-head on its underside may be provided with a plurality of milling fins that assist the screw-head to be countersunk into the wood. For example, such milling fins follow a conical direction from the screw-head and toward the stem.

In some embodiments, there is provided a thread-less cylindrical area between the screw-head and the stem with the thread, the length of this cylindrical are being between 70% and 150% of the pitch. The pitch is measured along the axis of rotation of the screw and is the distance between two consecutive windings.

For example, the edges of the milling fins extend from the underside of the screw-head in a conical direction towards this cylindrical area and therefore do not reach the trunk with the thread completely.

For safe screwing, the head is fitted with a notch, such as a cross notch or a Torx notch.

The screw has a stem with a first diameter d1; the thread has a circumscribed circle with a second diameter d2.

The drill-point has a diameter D. The term diameter D of the drill-point is used with the meaning that it is the diameter of the hole drilled with the drill-point. This corresponds to the diameter of the largest circumscribed circle of the drill-point. As an option, the drill-point has only one circumscribed circle, regardless of the position of this circle along the drill-point in the direction parallel with the screw axis. For example, the drill-point in side view has parallel sides. Necessarily, D is smaller than the diameter of the thread d2, as the drill-point would otherwise drill a hole with a diameter D so large that the thread could no longer take a grip in the wood, which would not result in a useful wood-screw.

For example, D is in the range between the first diameter d1 and the second diameter d2. For example, D is between d1 + 0.1x (d2-d1) and d1 + 0.4x (d2-d1). This implies that the screw can be screwed into the wood in a more stable way and is not deflected so easily and that, after drilling, there is a gap between the stem and the wall of the milled hole, whereby the screw travels more easily through the wood as there is not so much friction.

For example, the drill-point has a diameter D and a length L+X, where L is the length from the drill-point beginning at the stem and to the end of the milling-wings, and X is the distance from the milling-wings to the central drill-tip. Both L and X are measured longitudinally along the axis of rotation of the screw.

### Brief Description of the Drawings

The invention will be described in more detail with reference to the drawings, in which:
FIG. 1 shows sketches of a possible embodiment of the screw with a side view, a cross-sectional view along section R and a view of the screw-head;
FIG. 2 is an enlarged section of the drill-point;
FIG. 3 is a perspective view of an embodiment of a screw;
FIG. 4 shows two photos a) and b) of an example of a drill-point for a screw;
FIG. 5 shows an alternative screw in a) side drawing and b) perspective
FIG. 6 shows a photo of a practical embodiment of the type of screw of FIG. 5.

### Detailed Description of the Invention

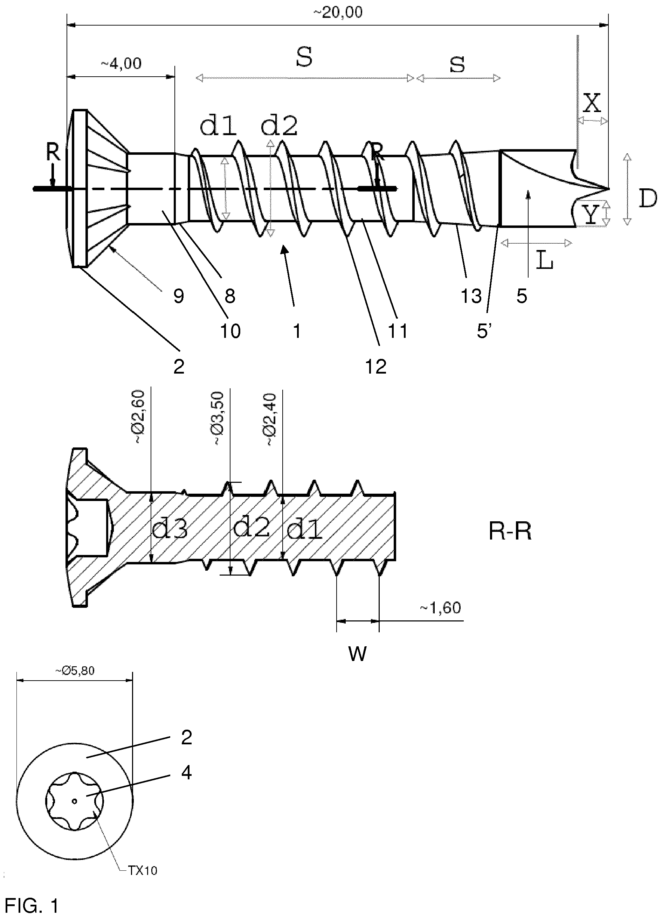

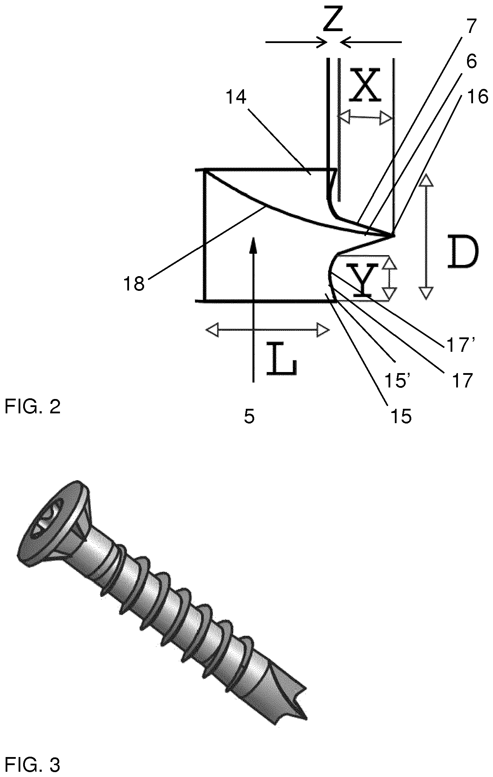

Figure 1a shows an embodiment of a wood-screw 1, the figure showing a side view of the screw, an image in the direction of the screw-head 2, and a cross-sectional view of a part of the screw 1, namely along the section R-R. FIG. 2 shows an enlarged section of the drill-point 2. FIG. 3 shows the same screw in a perspective view with a notch 4 for screwing.

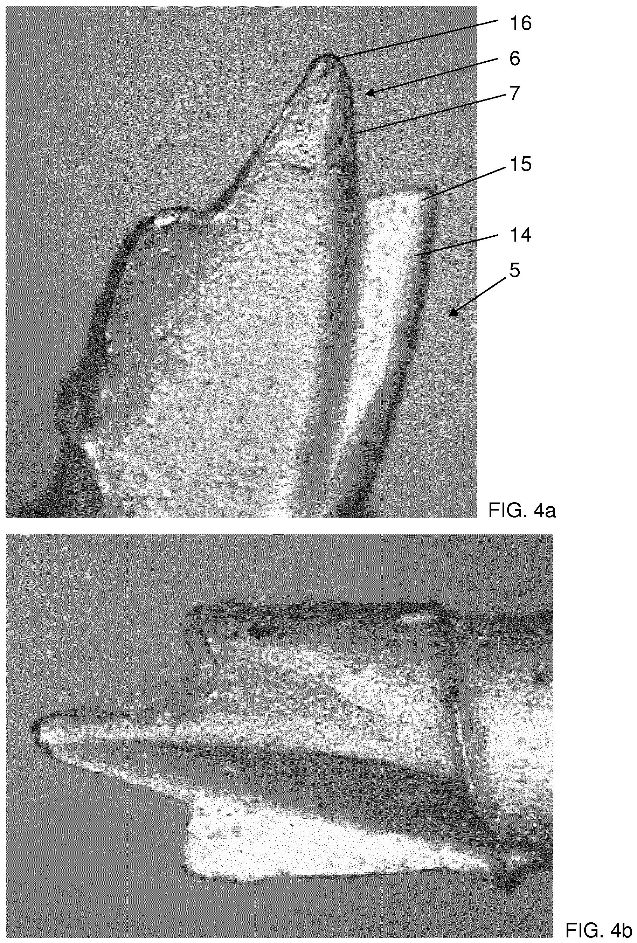

FIG. 4a and 4b show two photos of an example of a drill-point 5 of a manufactured screw 1. It is seen that the central drill-tip 6 is flat with approximately straight cutting edges 7 for acting as a drill while screwed into the wood.

Some dimensions are indicated in mm on FIG. 1, namely a total length of 20 mm and a length of 4 mm from the end of the screw-head 2 to the foremost edge 8 of the thread-less area 10 below the screw-head 2, as well as some examples of cross sections. However, these lengths are included by way of example only and not limiting the invention. There is shown a screw with a head that has a countersunk Torx notch 4, for example a TX10 size notch.

It is noted that the drill-point 5 has a shape which in the technical field is called a Brad-point drill, where the term Brad-point refers to the central drill-tip 6.

As an option, the screw-head 2 is provided with milling fins 9 on the underside, for example 4, 5, 6, or 8 milling fins, and typically arranged symmetrically about the longitudinal axis of the screw. The milling fins 9 have cutting edges following a conical direction from the underside of the screw-head 2 and towards the stem 11 of the thread 12. For example, the milling fins 9 extend to the periphery of the screw-head 2; or the milling fins 9 extend towards the periphery but only up to 80-95% of the screw-head diameter.

Immediately below the screw-head 2, there is an area 10 which is cylindrical with a diameter d3 and without thread. From here, a thread 12 of diameter d2 extends around a stem 11 of diameter d1 and towards the drill-point 5. The drill-point 5 starts where the thread 12 ends or at a small distance therefrom, the distance typically being less than a threaded pitch W, in order to have as many windings between the drill-point 5 and the screw-head 2 as possible, which optimizes the holding power of the screw 1.

As see in FIG. 1, the drill-point 5 has a diameter D that is larger than the diameter d1 of the stem 11 but smaller than the diameter d2 of the thread 12. For example, it is closer to d1 than d2, that is, D2 is less than (d1 + d2) / 2. For example, D is between d1 + 0.1x (d2-d1) and d1 + 0.4x (d2-d1).

The diameter d3 on the cylindrical area 10 under the head 2 is between d1 and d2. For example, d3 has the same size as D. It can be seen that the stem 11 has a first part S of constant diameter d1 and a diameter increase from d1 to D over another part 13 of length s. For example, this diameter increases linearly over this second part.

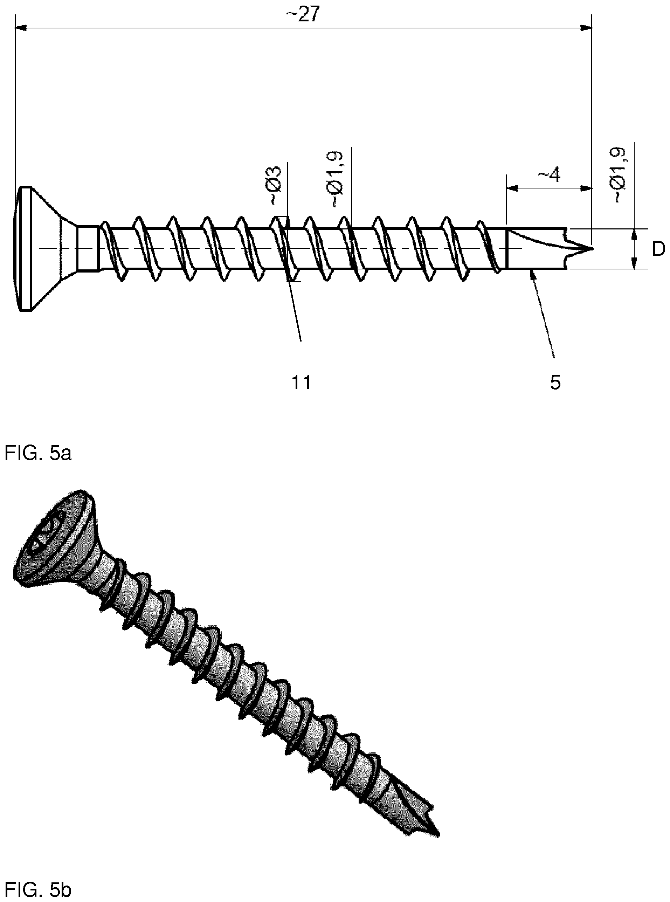

An alternative embodiment is illustrated in FIG. 5, where FIG. 5a is a side view and FIG. 5b is a perspective view. In that case, the diameter D of the drill-point is equal to the diameter d1 of the thread stem 11. However, the drill-point 5 relative to D is slightly longer than in the embodiment in FIG. 1

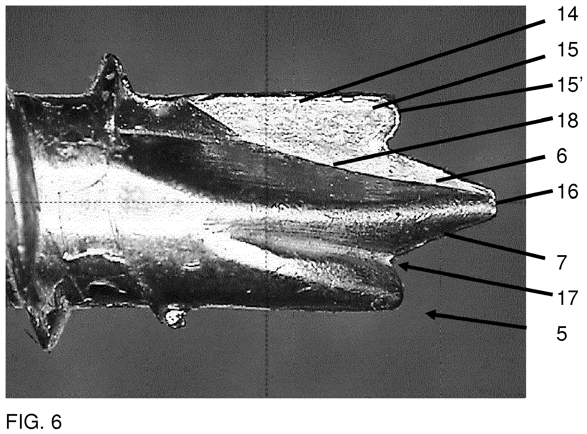

FIG. 6 shows a photo of a practical embodiment of the screw of FIG. 5. It is also noted here that the protruding milling-edge 15 at the periphery of the drill-point 5 has a foremost end 15' that is not flush with the periphery but instead has a small distance from the periphery. This small distance is less than 15% of D, and in the example shown about 10% of D

As indicated in FIG. 2, the drill-point has a length L+X where L is the length from the beginning of the drill-point 5' at or near the start of the thread 12 and to the end 15' of the milling-wings 14, and X is the distance from the foremost end 15' of the protruding milling-edge 15 to the tip 16 of the central drill-tip 6. Both L and X are measured longitudinally with the axis of rotation of the screw.

The milling-wings 14 extend from the central drill-tip 6 in a smooth arc 18 to the periphery of the drill-point 5. This arc 18 over the piece L+X is helical over an angle range of 70-130 degrees, for example over 80-100 degrees, and in some cases about 90 degrees.

As shown in FIG. 2, the central drill-tip 6 has a profile which in longitudinal sectional view is showing two straight legs that are constituting cutting edges 7 which originate from the foremost end 16 of the central drill-tip 6 and end at an arcuate profile 17 for the two milling-wings 14. These arcuate profiles 17 of the milling-wings 14 extend over a distance Y from the straight legs 7 of the central drill-tip 6 and towards the periphery of the drill-point 5.

With reference to FIG. 4 and 6, it is noticed that the milling tip 15 is slightly rounded and not sharp as in FIG. 1, 2, 3, and 5, which is due to the small dimensions, wherein a milling tip that is too sharp would be weaker and imply a risk for breaking off.

For example, with the dimensions of 20 mm length of the screw, Y will have a size of 0.7 mm. For example, X is 1.4 mm. For example, L is 3 mm. For example, D is 2.6 mm. However, the screw can be scaled and have variations of lengths and widths.

It has been found advantageous that the length L+X of the drill-point is between 20% and 60% greater than the diameter D on the drill-point, for example between 30% and 50%, for example about 40% longer.

In some embodiments, X is between 20% and 40%, for example between 25 and 35% of the length L+X. For example, in the illustrated embodiment with the indicated dimensions, X is about 1.4 mm.

It is particularly apparent in FIG. 2 that the milling-wings 14 are provided with a protruding milling-edge 15 at the periphery of the drill-point 5. This is achieved by a concavity 17 between the protruding milling-edge 15 and the central tip 6 where the concavity 17 has its bottom 17' provided a distance Z backwards relative to the millings-wing's 14 protruding milling-edge 15 at the periphery. That is, the distance from the screw-head 2 to the bottom of the concavity 17' is less than the distance from the screw-head 2 to the protruding milling-edge 15 of the milling-wing 14. Upon advance of the screw, this protruding milling-edge 15 will start to mill in the wood before the remaining part of the cutting blade 14 mills further.

In some embodiments, the milling-wings 14 extend less than 180 degrees around the central axis, for example between 70 and 150 degrees except for the central axis, for example between 80 and 120 degrees, for example between 80 and 100 degrees, for example about 90 degrees. In comparison with the anchoring element of the above-mentioned US7290972, the screw shown has more than three threaded grooves, a screw-head with a notch and a drill-point, wherein the milling-wings 14 extend less than 180 degrees around the central axis.

All lengths of the figures are illustrative only and may be varied, for example, by scaling or completely free, where the various above-mentioned relationship between sizes, in particular the percentages, can be used as needed.

The term foremost relates to the direction towards that part of the screw that is screwed into the wood.

## Claims

1. A wood-screw (1) for drilling and screwing into wood, wherein the woodscrew (1) is different from a dowel and has more than three windings and is dimensioned and configured for drilling and screwing into wood with tree growth rings, wherein the screw (1) comprises a screw-head (2) at one end of the screw and a stem (11) extending from the screw-head (2) towards the opposite end of the screw; wherein a thread (12) is provided around the stem (11), and a drill-point (5) is provided at the opposite end relatively to the screw-head (2); **characterized in that** the drill-point (5) is provided with a central drill-tip (6) and two milling-wings (14) of which one is provided on either of two side of the central drill-tip (6); wherein the distance between the screw-head (2) and the front end (16) of the central drill-tip (6) as measured along the axis of rotation of the screw is longer than the distance between the screw-head (2) and the front end (15') of the milling-wings (14); wherein the drill-point (5) has a diameter D and the thread (12) an outer diameter d2, where D is smaller than d2 for milling a hole into the wood with a diameter D during advance of the screw (1) prior to screwing the thread (12) into in the wood material around the hole, wherein the milling-wings (14) are provided with a protruding milling-edge (15) at the periphery of the drill-point (5), and a concavity (17) is provided between the protruding milling-edge (15) and the central drill-tip (6), wherein the concavity (17) has its bottom (17') a further distance Z towards the screw-head (2) relatively to the position of the protruding milling-edge (15) of the milling-wing (14) for thereby milling into the wood with the protruding milling-edge (15) first prior to milling with the remaining part of the milling-wing (14) when advancing the screw (1), wherein the concavity (17) of the milling-wings (14) has a curved profile from the central drill-tip (6) and towards the periphery of the drill-point (5).

2. A wood-screw according to claim 1, wherein the curved profile is smoothly curved.

3. A wood-screw according to claim 1 or 2, wherein the distance X from the milling-wings (14) and the end (16) of the central drill-tip (6) measured along the axis of rotation of the screw is between 20% and 40% of the length L+X of the drill-point (5), wherein L is the length from the beginning of the drill-point (5) at the stem (11) and to the foremost end (15') of the milling-wings (14).

4. A wood-screw according to claim 1 or 2, wherein the distance X from the milling-wings (14) and the end (16) of the central drill-tip (6), measured along the axis of rotation of the screw, is between 20% and 40% of the length L+X of the drill-point (5), wherein L is the length from the beginning (5') of the drill-point (5) at the stem (11) and to the foremost end (15') of the milling-wings (14).

5. A wood-screw according to any one of the preceding claims, wherein the central drill-tip (6) has a substantially triangular profile with two straight or approximately straight legs, which constitute cutting edges (7) and which originate from the end (16) of the central drill-tip (6) and ends at a curving profile in a concavity (17) for the two milling-wings (14).

6. A wood-screw according to any one of the preceding claims, wherein a threadless (10) cylindrical region (10) is provided between the stem (11) with the thread (12) and the screw-head (2), wherein the length of this cylindrical region (10) is between 50% and 150% of the thread (12) pitch W.

7. A wood-screw according to any one of the preceding claims, wherein the drill-point (5) has a diameter D and a length L+X, wherein X is the distance from the milling-wings (14) to the foremost end (16) of the central drill-tip (6) measured along the axis of rotation of the screw (1), and L is the length of the beginning (5') of the drill-point (5) at the stem (11) and to the foremost end (15') of the milling-wings (14); wherein the length L+X is 20% -60% greater than the diameter of the drill-point (5).

8. Use of a wood-screw of any of the foregoing requirements for minimizing the tendency of the wood-screw of being deflected sideways by tree growth rings during its screwing into wood.

9. A method of minimizing the tendency of the wood-screw of being deflected sideways by three growth rings during its screwing into wood, wherein the woodscrew (1) is different from a dowel and has more than three windings and is dimensioned and configured for drilling and screwing into wood with tree growth rings, wherein the screw comprises a screw-head (2) at one end of the screw and a stem (11) extending from the screw-head (2) towards the opposite end of the screw; wherein the method comprises providing the screw with a thread (12) that is configured and suitable for screwing in wood, and wherein a drill-point (5) is provided at the opposite end relatively to the screw-head (2); **characterized in that** the method comprises, providing the drill-point (5) with a central drill-tip (6) and two milling-wings (14) of which one is provided on either of two side of the central drill-tip (6); wherein the distance between the screw-head (2) and the front end (16) of the central drill-tip (6) as measured along the axis of rotation of the screw is longer than the distance between the screw-head (2) and the front end (15') of the milling-wings (14); wherein the drill-point (5) has a diameter D and the thread (12) an outer diameter d2, where D is smaller than d2 for milling a hole into the wood with a diameter D during advance of the screw (1) prior to screwing the thread (12) into in the wood material around the hole, wherein the milling-wings (14) are provided with a protruding milling-edge (15) at the periphery of the drill-point (5), and a concavity (17) is provided between the protruding milling-edge (15) and the central drill-tip (6), wherein the concavity (17) has its bottom (17') a further distance Z towards the screw-head (2) relatively to the position of the protruding milling-edge (15) of the milling-wing (14) for thereby milling into the wood with the protruding milling-edge (15) first prior to milling with the remaining part of the milling-wing (14) when advancing the screw (1), wherein the concavity (17) of the milling-wings (14) has a curved profile from the central drill-tip (6) and towards the periphery of the drill-point (5), wherein the method comprises screwing the screw into wood that has tree growth rings.

## Patentansprüche

1. Holzschraube (1) zum Bohren und Schrauben in Holz, wobei die Holzschraube (1) unterschiedlich zu einem Dübel ist und mehr als drei Wicklungen aufweist und zum Bohren und Schrauben in Holz mit Baumjahresringen bemessen und konfiguriert ist, wobei die Schraube (1) einen Schraubenkopf (2) an einem Ende der Schraube und einen Schaft (11), der sich von dem Schraubenkopf (2) zu dem entgegengesetzten Ende der Schraube erstreckt, umfasst; wobei ein Gewinde (12) um den Schaft (11) bereitgestellt ist und ein Bohrpunkt (5) an dem entgegengesetzten Ende relativ zu dem Schraubenkopf (2) bereitgestellt ist; **dadurch gekennzeichnet, dass** der Bohrpunkt (5) mit einer zentralen Bohrspitze (6) und zwei Fräsflügeln (14) bereitgestellt ist, von denen einer auf jeder von zwei Seiten der zentralen Bohrspitze (6) bereitgestellt ist; wobei der Abstand zwischen dem Schraubenkopf (2) und dem Vorderende (16) der zentralen Bohrspitze (6) wie entlang der Drehachse der Schraube gemessen länger ist als der Abstand zwischen dem Schraubenkopf (2) und dem Vorderende (15') der Fräsflügel (14); wobei der Bohrpunkt (5) einen Durchmesser D und das Gewinde (12) einen äußeren Durchmesser d2 aufweist, wobei D kleiner ist als d2 zum Fräsen eines Lochs in das Holz mit einem Durchmesser D während Voranbringen der Schraube (1) vor dem Schrauben des Gewindes (12) in das Holzmaterial um das Loch, wobei die Fräsflügel (14) mit einer hervorstehenden Fräskante (15) an dem Umfang des Bohrpunkts (5) bereitgestellt sind, und eine Konkavität (17) zwischen der hervorstehenden Fräskante (15) und der zentralen Bohrspitze (6) bereitgestellt ist, wobei die Konkavität (17) ihre Unterseite (17') in einem weiteren Abstand Z zu dem Schraubenkopf (2) relativ zu der Position der hervorstehenden Fräskante (15) des Fräsflügels (14) aufweist, um dadurch mit der hervorstehenden Fräskante (15) zuerst vor dem Fräsen mit dem verbleibenden Teil des Fräsflügels (14) in das Holz zu fräsen, wenn die Schraube (1) vorangebracht wird, wobei die Konkavität (17) der Fräsflügel (14) ein gekrümmtes Profil von der zentralen Bohrspitze (6) und zu dem Umfang des Bohrpunkts (5) aufweist.

2. Holzschraube nach Anspruch 1, wobei das gekrümmte Profil glatt gekrümmt ist.

3. Holzschraube nach Anspruch 1 oder 2, wobei der Abstand X von den Fräsflügeln (14) und dem Ende (16) der zentralen Bohrspitze (6) gemessen entlang der Drehachse der Schraube zwischen 20 % und 40 % der Länge L+X des Bohrpunkts (5) liegt, wobei L die Länge von dem Anfang des Bohrpunkts (5) an dem Schaft (11) und zu dem vordersten Ende (15') der Fräsflügel (14) ist.

4. Holzschraube nach Anspruch 1 oder 2, wobei der Abstand X von den Fräsflügeln (14) und dem Ende (16) der zentralen Bohrspitze (6), gemessen entlang der Drehachse der Schraube, zwischen 20 % und 40 % der Länge L+X des Bohrpunkts (5) liegt, wobei L die Länge von dem Anfang (5') des Bohrpunkts (5) an dem Schaft (11) und zu dem vordersten Ende (15') der Fräsflügel (14) ist.

5. Holzschraube nach einem der vorhergehenden Ansprüche, wobei die zentrale Bohrspitze (6) ein im Wesentlichen dreieckiges Profil mit zwei geraden oder ungefähr geraden Schenkeln aufweist, die Schneidekanten (7) darstellen und die aus dem Ende (16) der zentralen Bohrspitze (6) hervorgehen und an einem gekrümmten Profil in einer Konkavität (17) für die zwei Fräsflügel (14) enden.

6. Holzschraube nach einem der vorhergehenden Ansprüche, wobei ein gewindeloser (10) zylindrischer Bereich (10) zwischen dem Schaft (11) mit dem Gewinde (12) und dem Schraubenkopf (2) bereitgestellt ist, wobei die Länge dieses zylindrischen Bereichs (10) zwischen 50 % und 150 % der Steigung W des Gewindes (12) liegt.

7. Holzschraube nach einem der vorhergehenden Ansprüche, wobei der Bohrpunkt (5) einen Durchmesser D und eine Länge L+X aufweist, wobei X der Abstand von den Fräsflügeln (14) zu dem vordersten Ende (16) der zentralen Bohrspitze (6) ist, gemessen entlang der Drehachse der Schraube (1), und L die Länge des Anfangs (5') des Bohrpunkts (5) an dem Schaft (11) und zu dem vordersten Ende (15') der Fräsflügel (14) ist; wobei die Länge L+X 20 %-60 % größer ist als der Durchmesser des Bohrpunkts (5).

8. Verwendung einer Holzschraube nach einer der vorhergehenden Anforderungen zum Minimieren der Tendenz der Holzschraube, während des Schraubens in Holz durch Baumjahresringe seitwärts abgelenkt zu werden.

9. Verfahren zum Minimieren der Tendenz der Holzschraube, während des Schraubens in Holz durch Baumjahresringe seitwärts abgelenkt zu werden, wobei die Holzschraube (1) unterschiedlich zu einem Dübel ist und mehr als drei Wicklungen aufweist und zum Bohren und Schrauben in Holz mit Baumjahresringen bemessen und konfiguriert ist, wobei die Schraube einen Schraubenkopf (2) an einem Ende der Schraube und einen Schaft (11), der sich von dem Schraubenkopf (2) zu dem entgegengesetzten Ende der schraube erstreckt, umfasst; wobei das Verfahren Bereitstellen der Schraube mit einem Gewinde (12) umfasst, das zum Schrauben in Holz konfiguriert und geeignet ist, und wobei ein Bohrpunkt (5) an dem entgegengesetzten Ende relativ zu dem Schraubenkopf (2) bereitgestellt ist; **dadurch gekennzeichnet, dass** das Verfahren Bereitstellen des Bohrpunkts (5) mit einer zentralen Bohrspitze (6) und zwei Fräsflügeln (14) umfasst, von denen einer auf jeder von zwei Seiten der zentralen Bohrspitze (6) bereitgestellt ist; wobei der Abstand zwischen dem Schraubenkopf (2) und dem Vorderende (16) der zentralen Bohrspitze (6) wie entlang der Drehachse der Schraube gemessen länger ist als der Abstand zwischen dem Schraubenkopf (2) und dem Vorderende (15') der Fräsflügel (14); wobei der Bohrpunkt (5) einen Durchmesser D und das Gewinde (12) einen äußeren Durchmesser d2 aufweist, wobei D kleiner ist als d2 zum Fräsen eines Lochs in das Holz mit einem Durchmesser D während Voranbringen der Schraube (1) vor dem Schrauben des Gewindes (12) in das Holzmaterial um das Loch, wobei die Fräsflügel (14) mit einer hervorstehenden Fräskante (15) an dem Umfang des Bohrpunkts (5) bereitgestellt sind, und eine Konkavität (17) zwischen der hervorstehenden Fräskante (15) und der zentralen Bohrspitze (6) bereitgestellt ist, wobei die Konkavität (17) ihre Unterseite (17') in einem weiteren Abstand Z zu dem Schraubenkopf (2) relativ zu der Position der hervorstehenden Fräskante (15) des Fräsflügels (14) aufweist, um dadurch mit der hervorstehenden Fräskante (15) zuerst vor dem Fräsen mit dem verbleibenden Teil des Fräsflügels (14) in das Holz zu fräsen, wenn die Schraube (1) vorangebracht wird, wobei die Konkavität (17) der Fräsflügel (14) ein gekrümmtes Profil von der zentralen Bohrspitze (6) und zu dem Umfang des Bohrpunkts (5) aufweist, wobei das Verfahren Schrauben der Schraube in Holz, das Baumjahresringe aufweist, umfasst.

## Revendications

1. Vis à bois (1) pour perçage et vissage dans du bois, dans laquelle la vis à bois (1) est différente d'un goujon et possède plus de trois spires et est dimensionnée et configurée pour perçage et vissage dans du bois comportant des cernes de croissance d'arbre, dans laquelle la vis (1) comprend une tête de vis (2) à une extrémité de la vis et une tige (11) s'étendant de la tête de vis (2) vers l'extrémité opposée de la vis ; dans laquelle un filetage (12) est prévu autour de la tige (11), et une pointe de perçage (5) est prévue à l'extrémité opposée par rapport à la tête de vis (2) ; **caractérisée en ce que** la pointe de perçage (5) est pourvue d'un embout de perçage central (6) et de deux ailettes de fraisage (14) dont l'une est prévue sur l'un ou l'autre des deux côtés de l'embout de perçage central (6) ; dans laquelle la distance entre la tête de vis (2) et l'extrémité avant (16) de l'embout de perçage central (6) telle que mesurée le long de l'axe de rotation de la vis est plus longue que la distance entre la tête de vis (2) et l'extrémité avant (15') des ailettes de fraisage (14) ; dans laquelle la pointe de perçage (5) a un diamètre D et le filetage (12) un diamètre externe d2, où D est inférieur à d2 pour fraiser un trou dans le bois ayant un diamètre D lors de la progression de la vis (1) avant de visser le filetage (12) dans le matériau à base de bois autour du trou, dans laquelle les ailettes de fraisage (14) sont pourvues d'une arête de fraisage en saillie (15) sur le pourtour de la pointe de perçage (5), et une concavité (17) est prévue entre l'arête de fraisage en saillie (15) et l'embout de perçage central (6), dans laquelle la concavité (17) a sa partie inférieure (17') à une distance Z plus éloignée vers la tête de vis (2) par rapport à la position de l'arête de fraisage en saillie (15) de l'ailette de fraisage (14) de façon à fraiser d'abord dans le bois avec l'arête de fraisage en saillie (15) avant de fraiser avec la partie restante de l'ailette de fraisage (14) lors de la progression de la vis (1), dans laquelle la concavité (17) des ailettes de fraisage (14) a un profil incurvé par rapport à l'embout de perçage central (6) et vers le pourtour de la pointe de perçage (5).

2. Vis à bois selon la revendication 1, dans laquelle le profil incurvé est légèrement incurvé.

3. Vis à bois selon la revendication 1 ou 2, dans laquelle la distance X depuis les ailettes de fraisage (14) et l'extrémité (16) de l'embout de perçage central (6) mesurée le long de l'axe de rotation de la vis est comprise entre 20 % et 40 % de la longueur L + X de la pointe de perçage (5), dans laquelle L est la longueur depuis le début de la pointe de perçage (5) au niveau de la tige (11) et jusqu'à l'extrémité la plus en avant (15') des ailettes de fraisage (14).

4. Vis à bois selon la revendication 1 ou 2, dans laquelle la distance X depuis les ailettes de fraisage (14) et l'extrémité (16) de l'embout de perçage central (6), mesurée le long de l'axe de rotation de la vis, est comprise entre 20 % et 40 % de la longueur L + X de la pointe de perçage (5), dans laquelle L est la longueur depuis le début (5') de la pointe de perçage (5) au niveau de la tige (11) et jusqu'à l'extrémité la plus en avant (15') des ailettes de fraisage (14).

5. Vis à bois selon l'une quelconque des revendications précédentes, dans laquelle l'embout de perçage central (6) a un profil sensiblement triangulaire avec deux pattes droites ou quasiment droites, qui constituent des arêtes tranchantes (7) et qui partent de l'extrémité (16) de l'embout de perçage central (6) et se terminent au niveau d'un profil incurvé dans une concavité (17) des deux ailettes de fraisage (14).

6. Vis à bois selon l'une quelconque des revendications précédentes, dans laquelle une (10) région cylindrique (10) sans filetage (10) est prévue entre la tige (11) présentant le filetage (12) et la tête de vis (2), dans laquelle la longueur de ladite région cylindrique (10) est comprise entre 50 % et 150 % du pas du filetage W (12).

7. Vis à bois selon l'une quelconque des revendications précédentes, dans laquelle la pointe de perçage (5) a un diamètre D et une longueur L + X, dans laquelle X est la distance des ailettes de fraisage (14) à l'extrémité la plus en avant (16) de l'embout de perçage central (6) mesurée le long de l'axe de rotation de la vis (1), et L est la longueur depuis le début (5') de la pointe de perçage (5) au niveau de la tige (11) et jusqu'à l'extrémité la plus en avant (15') des ailettes de fraisage (14) ; dans laquelle la longueur L + X est de 20 % à 60 % supérieure au diamètre de la pointe de perçage (5).

8. Utilisation d'une vis à bois selon l'une quelconque des revendications précédentes pour minimiser la tendance de la vis à bois à être déformée latéralement par les cernes de croissance d'arbre lors de son vissage dans le bois.

9. Procédé de minimisation de la tendance de la vis à bois à être déformée latéralement par les cernes de croissance d'arbre lors de son vissage dans le bois, dans lequel la vis à bois (1) est différente d'un goujon et possède plus de trois spires et est dimensionnée et configurée pour perçage et vissage dans du bois comportant des cernes de croissance d'arbre, dans lequel la vis comprend une tête de vis (2) à une extrémité de la vis et une tige (11) s'étendant de la tête de vis (2) vers l'extrémité opposée de la vis ; dans lequel le procédé consiste à pourvoir la vis d'un filetage (12) qui est configuré et conçu pour vissage dans du bois, et dans lequel une pointe de perçage (5) est prévue à l'extrémité opposée par rapport à la tête de vis (2) ; **caractérisé en ce que** le procédé consiste à pourvoir la pointe de perçage (5) d'un embout de perçage central (6) et de deux ailettes de fraisage (14) dont l'une est prévue sur l'un des deux côtés de l'embout de perçage central (6) ; dans lequel la distance entre la tête de vis (2) et l'extrémité avant (16) de l'embout de perçage central (6) telle que mesurée le long de l'axe de rotation de la vis est plus longue que la distance entre la tête de vis (2) et l'extrémité avant (15') des ailettes de fraisage (14) ; dans lequel la pointe de perçage (5) a un diamètre D et le filetage (12) un diamètre externe d2, où D est inférieur à d2 pour fraiser un trou dans le bois ayant un diamètre D lors de la progression de la vis (1) avant de visser le filetage (12) dans le matériau à base de bois autour du trou, dans lequel les ailettes de fraisage (14) sont pourvues d'une arête de fraisage en saillie (15) sur le pourtour de la pointe de perçage (5), et une concavité (17) est prévue entre l'arête de fraisage en saillie (15) et l'embout de perçage central (6), dans lequel la concavité (17) a sa partie inférieure (17') à une distance Z plus éloignée vers la tête de vis (2) par rapport à la position de l'arête de fraisage en saillie (15) de l'ailette de fraisage (14) de façon à fraiser d'abord dans le bois avec l'arête de fraisage en saillie (15) avant de fraiser avec la partie restante de l'ailette de fraisage (14) lors de la progression de la vis (1), dans lequel la concavité (17) des ailettes de fraisage (14) a un profil incurvé par rapport à l'embout de perçage central (6) et vers le pourtour de la pointe de perçage (5), dans lequel le procédé consiste à visser la vis dans du bois qui comporte des cernes de croissance d'arbre.
